# EUROPÄISCHE PATENTSCHRIFT

(11) **EP 1 447 898 B1**
(45) Veröffentlichungstag und Bekanntmachung des Hinweises auf die Patenterteilung: **18.07.2007**
(21) Anmeldenummer: 03027428.6
(22) Anmeldetag: 28.11.2003
(51) Int. Cl.: H02K 7/14

(54) **Aussenläufermotor**
Outer rotor motor
Moteur à rotor extérieur

(30) Priorität: 12.02.2003 DE 10305649
(43) Veröffentlichungstag der Anmeldung: 18.08.2004
(73) Patentinhaber: ROBERT BOSCH GMBH, 70442 Stuttgart (DE)
(72) Erfinder: Ewert, Andreas, 77839 Lichtenau (DE); Liedel, Markus, 91257 Pegnitz (DE); Stevens, William, Maynard, MA 01754 (US)

(56) Entgegenhaltungen:
- EP-A- 0 996 214
- PATENT ABSTRACTS OF JAPAN vol. 018, no. 102 (E-1511), 18. Februar 1994 (1994-02-18) & JP 05 300715 A (DAIKIN IND LTD), 12. November 1993 (1993-11-12)

## Beschreibung

### Stand der Technik

Die Erfindung geht aus von einem Außenläufermotor nach dem Oberbegriff des Anspruchs 1.

Außenläufermotoren werden im Kraftfahrzeugbau insbesondere zum Antrieb von dem Kühlsystem des Verbrennungsmotors zugeordneten Lüftern und von Gebläsen in Klimaaggregaten verwendet, da der Außenläufermotor sich bauraumsparend in die Nabe des Lüfter- oder Gebläserads integrieren läßt. Der meist kappen- oder topfförmige Rotor wird im Betrieb in Biegeschwingungen versetzt, die in dem vom Motor oder von einem an dem Motor angekoppelten Aggregat, wie Lüfter- und Gebläseräder, abgestrahlten Luftschall Resonanzüberhöhungen auslösen.

JP 05300715 offenbart einen Außenläufermotor gemäß dem Oberbegriff des Anspruchs 1.

### Vorteile der Erfindung

Der erfindungsgemäße Außenläufermotor mit den Merkmalen des Anspruchs 1 hat den Vorteil, daß durch den die Außenseite des Rotors zumindest teilweise bedeckenden Dämpfer aus einem elastischen, dämpfenden Werkstoff die von Biegeschwingungen verursachten Resonanzüberhöhungen in ihrer akustischen Wahrnehmbarkeit deutlich reduziert sind. Als Werkstoffe für den Dämpfer werden Kautschuk, Gummi, Elastomer oder Polyurethan, z.B. Silikon, sowie deren Legierungen und Mischungen verwendet.

Der Dämpfer ist als eine ein- oder zweiteilige Dämpferkappe ausgebildet, die bei einem topfförmig ausgeführten Rotor dessen Topfmantel umschließt und dessen Topfboden zumindest teilweise überdeckt. Durch diese Ausbildung des Dämpfers kann der Kontakt zwischen dem Rotor und dem Dämpfer bzw. dem Dämpfer und dem an dem Rotor angekoppelten Aggregat axial und radial erfolgen und dadurch die dämpfende Wirkung axial und radial erzeugt werden. Die Kontaktflächen zwischen Rotor und Dämpfer sind dabei glatt oder mit erhöhten, rippen- oder noppenartigen Elementen versehen, die als elastischer Toleranzausgleich, zur Vorspannung als Formschluß oder als Montagehilfe herangezogen werden können.

Durch die in den weiteren Ansprüchen aufgeführten Maßnahmen sind vorteilhafte Weiterbildungen und Verbesserungen des im Anspruch 1 angegeben Außenläufermotors möglich.

Gemäß einer vorteilhaften Ausführungsform der Erfindung sind auf der Innenseite des sich axial erstreckenden Kappenbereichs, also dem Kappenrand, profilierte Axialrippen angeformt, die an der Innenfläche des Kappenrandes radial vorstehen. Solche Axialrippen können mit verschiedenem Profil entsprechend der gewünschten Elastizität der Axialrippen ausgeführt werden.

Gemäß einer vorteilhaften Ausführungsform der Erfindung ist der Dämpfer als Einzelteil ausgebildet und auf dem Rotor befestigt. Alternativ kann der Dämpfer, insbesondere in der Form als Dämpferkappe, auch vorteilhaft auf den Rotor, z.B. in 2K-Spritztechnik, aufgespritzt werden.

In Verbindung mit einem anzutreibenden Aggregat, insbesondere einem Lüfter- oder Gebläserad, wird gemäß einer vorteilhaften Ausführungsform der Erfindung der Dämpfer als Einzelteil hergestellt und zwischen Rotor und Lüfter- oder Gebläseradnabe eingespannt. Durch den ohnehin zwischen dem Rotor und der Lüfter- oder Gebläsenabe vorhandenen Spalt, der von dem Dämpfer ausgefüllt wird, ist kein zusätzlicher Bauraum zur Unterbringung des Dämpfers notwendig, so daß sich das Einbauvolumen für den Lüfter nicht ändert. Der Wirkmechanismus des Dämpfers setzt sich aus einer Walkdämpfung, einer Eigendämpfung, einer internen Dämpfung (Absorption) und einer Fügestellendämpfung durch Reibung an den Kontaktflächen, die sog. externe Dämpfung, zusammen.

In Verbindung mit einem Lüfter oder Gebläse kann der Dämpfer auch als Einzelteil hergestellt und an der Innenwand der Lüfter- oder Gebläsenabe befestigt oder an die Innenwand der Lüfter- oder Gebläsenabe, z.B. in 2K-Spritztechnik, angespritzt werden.

### Zeichnung

Die Erfindung ist anhand von in der Zeichnung dargestellten Ausführungsbeispielen und einem Beispiel, das kein Ausführungsbeispiel der Erfindung ist, im folgenden näher beschrieben. Es zeigen:
- Fig. 1: eine perspektivische Draufsicht eines Außenläufermotors mit Dämpfer,
- Fig. 2: eine perspektivische Draufsicht des Dämpfers in Fig.1,
- Fig. 3: ausschnittweise verschiedene Profile im Mantelbereich des Dämpfers in Fig. 2,
- Fig. 4: einen Längsschnitt des mit einem Lüfterrad zusammengebauten Außenläufermotors gemäß Fig. 1,
- Fig. 5: eine perspektivische Darstellung des Dämpfers gemäß einem Beispiel für den Außenläufermotor in Fig. 1.

### Beschreibung der Ausführungsbeispiele

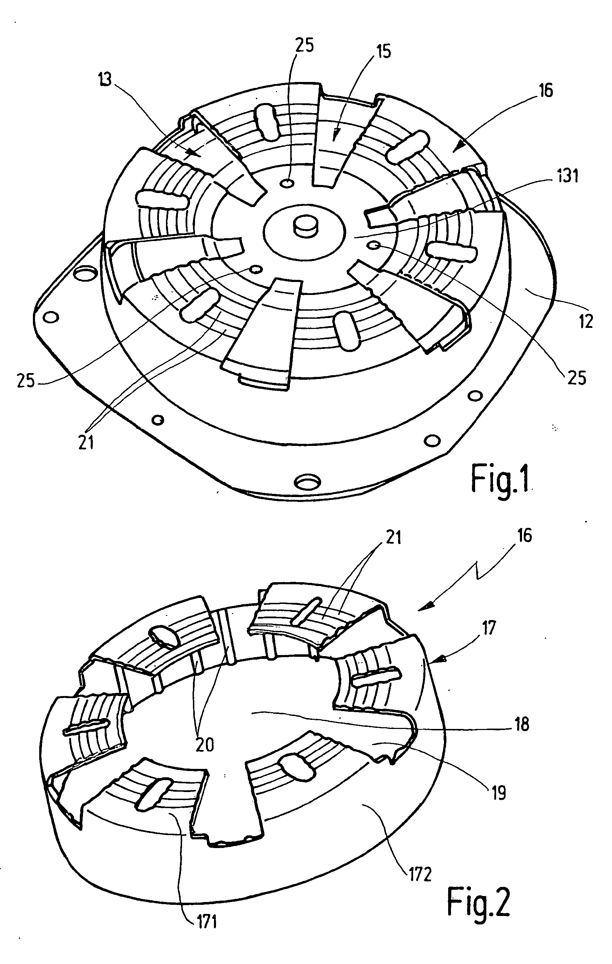

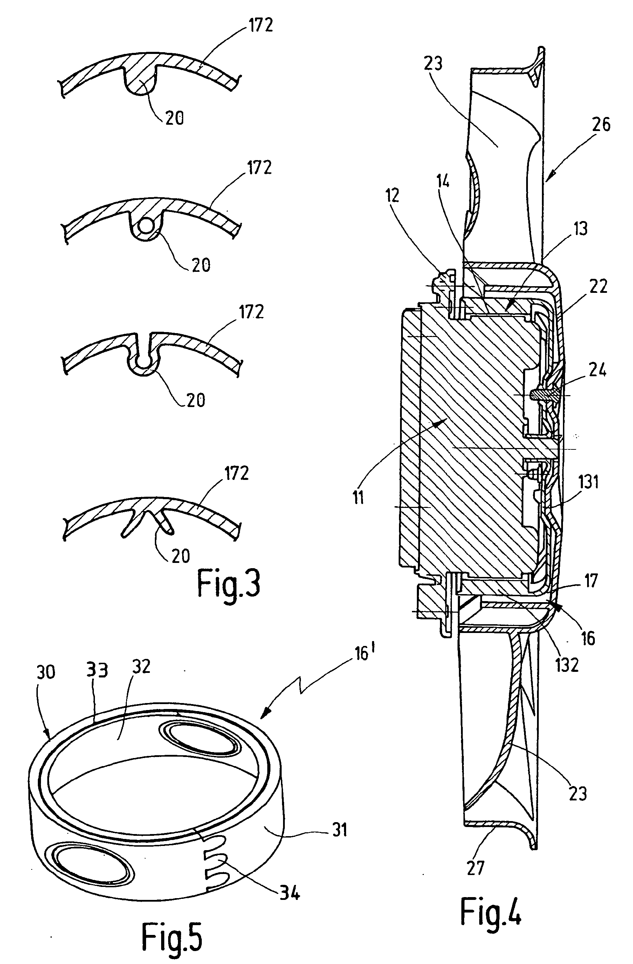

Der in Fig. 1 in perspektivischer Draufsicht und in Fig. 4 im schematischen Längsschnitt dargestellte Außenläufermotor weist einen Stator 11, der an einer Trägerplatte 12 festgelegt ist, und einen topfförmigen Rotor 13 mit Topfboden 131 und Topfmantel 132 auf, der über seinen Topfboden 131 am Stator 11 drehend gelagert ist und mit seinem Topfmantel 132 unter Belassung eines radialen Luftspalts 14 den Stator 11 übergreift. Im Topfboden 131 sind Aussparungen 15 zur Motorbelüftung enthalten. Zur Bedämpfung der im Betrieb durch im Rotor 13 auftretenden Biegeschwingungen verursachten Resonanzüberhöhungen in dem vom Motor abgestrahlten Luftschall ist auf den topfförmigen Rotor 13 ein Dämpfer 16 aus einem elastischen Werkstoff aufgesetzt. Als elastische Werkstoffe wird Gummi, Kautschuk (insbesondere EPDM und Butylkautschuk), Elastomere, thermoplastische Elastomere, Polyurethane (Silikone) u. ä. eingesetzt.

Im Ausführungsbeispiel der Fig. 1 ist der Dämpfer 16 als Dämpferkappe 17 mit Kappenboden 171 und Kappenrand 172 ausgebildet, der auf den Rotor 13 aufgespannt ist und mit seinem Kappenrand 172 den Topfmantel 132 vollständig und mit seinem Kappenboden 171 den Topfboden 131 teilweise überdeckt. Im Topfboden 131 sind eine zentrale Öffnung 18 und mit den Aussparungen 15 im Topfmantel 132 kongruente Ausnehmungen 19 vorgesehen. Im Ausführungsbeispiel der Fig. 1 und 2 ist der als Dämpferkappe 17 ausgebildete Dämpfer 16 als Einzelteil hergestellt und mit seinem Kappenrand 172 auf dem Topfmantel 132 des Rotors 13 befestigt. Während der Topfmantel 132 des Rotors 13 glattflächig ausgebildet ist, sind auf der Innenfläche des Kappenrands 172 profilierte Axialrippen 20 einstückig angeformt, die hin zum Topfmantel 132 des Rotors 13 radial vorspringen. Diese profilierten Axialrippen 20 dienen zur Vorspannung des Dämpfers 16 auf dem Rotor 13, als elastischer Toleranzausgleich und als Montagehilfe. Das Profil der Axialrippen 20 wird, entsprechend angepaßt an die im jeweiligen Anwendungsfall jeweils gewünschten elastischen Eigenschaften, verschiedenartig ausgeführt. Vier verschiedene Profile der Axialrippen 20 sind in Fig. 3 dargestellt.

Wie in Fig. 1 und 2 zu sehen ist, sind außen auf dem Kappenboden 171 konzentrische Ringwülste 21 ausgebildet. Sie dienen dem gleichen Zweck der Verspannung wie die Axialrippen 20, jetzt aber gegenüber einem am Rotor 13 befestigten anzutreibenden Aggregat, wie es ein Lüfterrad 26 eines Kühlerlüfters oder eines Klimagebläses darstellt. Ein solches Lüfterrad 26 ist in Fig. 4 im Längsschnitt dargestellt. Es weist eine Nabe 22 und eine Mehrzahl von Lüfterradschaufeln 23 auf, die von der Nabe 22 um gleiche Umfangswinkel versetzt radial abstehen und an den Schaufelspitzen an einem Außenring 27 festgelegt sind. Die Nabe 22 ist auf den mit dem Dämpfer 16 belegten Rotor 13 aufgeschoben und mit Schrauben 24, die in am Topfboden 131 des Rotors 13 eingearbeiteten Gewindelöchern 25 eingeschraubt sind, am Topfboden 131 drehfest festgelegt. Über die konzentrischen Ringwülste 21 haben Nabe 22 und Rotor 13 engen Kontakt, so daß von dem Dämpfer 16 eine dämpfende Wirkung im Axialrichtung erzeugt wird. Die Axialrippen 20 pressen den Kappenrand 172 der Kappe 17 radial an die Nabe 26, so daß auch hier ein enger Kontakt besteht und eine dämpfende Wirkung in Radialrichtung erzeugt wird.

In einer Abwandlung des beschriebenen Zusammenbaus von Außenläufermotor und Lüfterrad 26 ist die Dämpferkappe 17 ebenfalls als Einzelteil ausgeführt aber nicht auf dem Rotor 13 befestigt, sondern lediglich zwischen Nabe 22 und Rotor 13 eingespannt. Die beim Aufschieben der Dämpferkappe 17 auf den Rotor 13 eine radiale Vorspannung erzeugenden Axialrippen 20 dienen dabei als Montagehilfe zur Fixierung des Dämpfers 16 auf dem Rotor 13.

In einer alternativen Ausführungsform wird der Dämpfer 16 nicht als Einzelteil hergestellt, sondern auf den Rotor 13 oder auf die Innenwand der Nabe 22 als Überzug bzw. Innenauskleidung aufgespritzt. Er kann hierzu als einteiliges Mehr-Komponenten-Element, z.B. in 2K-Technik, zusammen mit dem Rotor- bzw. dem Lüfterrad 26 hergestellt werden. Selbstverständlich besteht dann eine Komponente des Mehr-Komponenten-Elements aus einem elastischen und dämpfenden Werkstoff.

In Fig. 5 ist ein Beispiel für einen Dämpfer 16' dargestellt, das kein Ausführungsbeispiel der Erfindung ist, aber nützlich für das Verständnis der Erfindung ist. Der hier als Dämpferring 30 ausgebildete Dämpfer 16' besteht aus einem Hybridwerkstoff, bei dem zwischen zwei Metall-Ringen 31, 32 ein Weichstoffring 33 aus einer dämpfenden Weichkomponente, z.B. ein Gummiring, eingespannt ist. Alternativ kann der Weichstoffring 33 durch parallele Abschnitte der Weichkomponente ersetzt werden. Dieser Dämpferring 30 wird auf den Topfmantel 132 des Rotors 13 aufgespannt. Im Ausführungsbeispiel der Fig. 5 ist hierzu der Dämpferring 30 an mindestens einer Stelle axial aufgetrennt und wird nach Aufschieben auf den Rotor 13 mittels einer an der Trennstelle ausgebildeten Verzapfung 34 geschlossen. Anstelle der Verzapfung 34 kann die Trennstelle auch durch Verschweißen geschlossen werden. Im Falle der Befestigung des Lüfterrads 26 wird dessen Nabe 22 über den Dämpferring 30 geschoben.

Die Erfindung ist nicht auf die beschriebenen Ausführungsbeispiele der Dämpfer 16 beschränkt. Der als Dämpferkappe 17 ausgebildete Dämpfer 16 kann in Kappenboden 171 und Kappenrand 172 aufgeteilt sein. Der Dämpfer 16' kann durch mehrere axial nebeneinander angeordnete Dämpferringe 30 gemäß Fig. 5 realisiert werden.

## Patentansprüche

1. Außenläufermotor mit einem Stator (11) und einem Rotor (13), der den Stator unter Belassung eines Luftspalts (14) umgibt, wobei an der Außenseite des Rotors (13) mindestens ein Dämpfer (16) angeordnet ist, der zumindest teilweise aus einem elastischen Werkstoff besteht, **dadurch gekennzeichnet, dass** der Rotor (13) topfförmig mit Topfboden (131) und Topfmantel (132) ausgeführt ist und dass der Dämpfer (16) als Dämpferkappe (17) ausgebildet ist, die den Topfmantel (132) umschließt und den Topfboden (131) zumindest teilweise überdeckt.

2. Außenläufermotor nach Anspruch 1, **dadurch gekennzeichnet, dass** der Dämpfer als ein den Rotor (13) umschließender Dämpfungsring (30) aus einem Hybridwerkstoff, vorzugsweise aus Metall-Weichkomponente-Metalt, ausgebildet ist.

3. Außenläufermotor nach Anspruch 1, **dadurch gekennzeichnet, dass** der sich radial erstreckende Kappenboden (171) der Dämpferkappe (17) auf seiner dem Rotor (13) abgekehrten Außenfläche axial vorspringende konzentrische Ringwülste (21) trägt.

4. Außenläufermotor nach Anspruch 1 oder 3, **dadurch gekennzeichnet, dass** auf der dem Rotor (13) zugekehrten Innenseite des sich axial erstreckenden Kappenrands (172) profilierte Axialrippen (20) vom Kappenrand (172) radial abstehen.

5. Außenläufermotor nach einem der Ansprüche 1 bis 4, **dadurch gekennzeichnet, dass** ein vom Rotor (13) anzutreibendes Aggregat (26) mit einer Nabe (22) über den Dämpfer (16) geschoben und drehfest mit dem Rotor (13) verbunden ist.

6. Außenläufermotor nach Anspruch 5, **dadurch gekennzeichnet, dass** der Dämpfer (16) zwischen Rotor (13) und Nabe (22) eingespannt ist.

7. Außenläufermotor nach Anspruch 5, **dadurch gekennzeichnet, dass** der Dämpfer (16) an der Innenwand der Nabe (22) befestigt, vorzugsweise angespritzt, ist.

8. Außenläufermotor nah einem der Ansprüche 1, 3 bis 5, **dadurch gekennzeichnet, dass** der Dämpfer (16) auf den Rotor (13) aufgespritzt ist.

9. Außenläufermotor nach einem der Ansprüche 1, 3 bis 5, **dadurch gekennzeichnet, dass** der Dämpfer (16) radial und/oder axial am Rotor (13) befestigt ist.

10. Außenläufermotor nach einem der Ansprüche 5 bis 9, **dadurch gekennzeichnet, dass** das anzutreibende Aggregat ein Lüfterrad (26) eines Lüfters oder Gebläses ist.

## Claims

1. External rotor motor having a stator (11) and a rotor (13) which surrounds the stator while leaving an air gap (14), with at least one damper (16) which is at least partially composed of an elastic material being arranged on the outer face of the rotor (13), **characterized in that** the rotor (13) is designed in a pot-like manner with a pot base (131) and a pot casing (132), and **in that** the damper (16) is in the form of a damper cap (17) which surrounds the pot casing (132) and at least partially covers the pot base (131).

2. External rotor motor according to Claim 1, **characterized in that** the damper is in the form of a damping ring (30) which surrounds the rotor (13) and is made of a hybrid material, preferably of metal/soft component/metal.

3. External rotor motor according to Claim 1, **characterized in that** the radially extending cap base (171) of the damper cap (17) has axially projecting concentric annular beads (21) on its outer face which faces away from the rotor (13).

4. External rotor motor according to Claim 1 or 3, **characterized in that** profiled axial ribs (20) protrude radially from the cap edge (172) on the inner face of the axially extending cap edge (172) which faces the rotor (13).

5. External rotor motor according to one of Claims 1 to 4, **characterized in that** a hub (22) of an assembly (26) which can be driven by the rotor (13) is pushed over the damper (16) and the said assembly (26) is connected to the rotor (13) in a rotationally fixed manner.

6. External rotor motor according to Claim 5, **characterized in that** the damper (16) is clamped between the rotor (13) and the hub (22).

7. External rotor motor according to Claim 5, **characterized in that** the damper (16) is fastened to, preferably injection-moulded on, the inner wall of the hub (22).

8. External rotor motor according to one of Claims 1, 3 to 5, **characterized in that** the damper (16) is injection-moulded onto the rotor (13).

9. External rotor motor according to one of Claims 1, 3 to 5, **characterized in that** the damper (16) is radially and/or axially fastened to the rotor (13).

10. External rotor motor according to one of Claims 5 to 9, **characterized in that** the assembly which is to be driven is a fan impeller (26) of a fan or blower.

## Revendications

1. Moteur à rotor extérieur comportant un stator (11) et un rotor (13) qui entoure le stator (14), avec interposition d'un entrefer et dont la face externe du rotor (13) comporte au moins un amortisseur (16) compose au moins en partie d'un matériau flexible,
**caractérisé en ce que**
le rotor (13) a une forme de pot avec un fond de pot (131) et une enveloppe de pot (132), et l'amortisseur (16) est un capuchon amortisseur (17) qui entoure l'enveloppe de pot (132) et couvre au moins partiellement le fond de pot (131).

2. Moteur à rotor extérieur selon la revendication 1,
**caractérisé en ce que**
l'amortisseur un anneau amortisseur (30) entourant le rotor (13) constitué d'un matériau hybride, de préférence en métal et composants doux de métal.

3. Moteur à rotor extérieur selon la revendication 1,
**caractérisé en ce que**
le fond du capuchon (171) du capuchon amortisseur (17) s'étendant radialement porte des tores concentriques (21) faisant saillie axialement sur sa surface extérieure détournée du rotor (13).

4. Moteur à rotor extérieur selon la revendication 1 ou 3,
**caractérisé en ce que**
des nervures axiales profilées (20) se dressent radialement du bord de capuchon (172), sur la face intérieure du bord de capuchon (172) détournée du rotor (13) s'étendant axialement.

5. Moteur à rotor extérieur selon l'une quelconque des revendications 1 à 4,
**caractérisé en ce qu'**
un agrégat (26) avec un moyeu (22) destiné à être entraîné par le rotor (13) est poussé sur l'amortisseur (16) et relié au rotor (13) de manière à résister à la rotation.

6. Moteur à rotor extérieur selon la revendication 5,
**caractérisé en ce que**
l'amortisseur (16) est encastré entre le rotor (13) et le moyeu (22).

7. Moteur à rotor extérieur selon la revendication 5,
**caractérisé en ce que**
l'amortisseur (16) est fixé, de préférence injecté sur la paroi intérieure du moyeu (22).

8. Moteur à rotor extérieur selon l'une quelconque des revendications 1, 3 à 5,
**caractérisé en ce que**
l'amortisseur (16) est injecté par surmoulage sur le rotor (13).

9. Moteur à rotor extérieur selon l'une quelconque des revendications 1, 3 à 5,
**caractérisé en ce que**
l'amortisseur (16) est fixé radialement et/ou axialement sur le rotor (13).

10. Moteur à rotor extérieur selon l'une quelconque des revendications 5 à 9,
**caractérisé en ce que**
l'agrégat destiné à être entraîné est un rotor de ventilateur (26) d'un ventilateur ou d'une soufflante.
